# EUROPÄISCHE PATENTANMELDUNG

(11) **EP 2 674 240 A1**
(43) Veröffentlichungstag der Anmeldung: **18.12.2013**
(21) Anmeldenummer: 12171901.7
(22) Anmeldetag: 14.06.2012
(51) Int. Cl.: B23K 31/02, B23K 31/12, G01N 23/06, G01N 23/18

(54) **Verfahren zum Herstellen einer Schweißverbindung mit Erstellen einer Aufnahme der Schweissverbindung mit gekühlten Röntgenröhren**

(71) Anmelder: Siemens Aktiengesellschaft, 80333 München (DE)
(72) Erfinder: Borgmann, Christian, 46284 Dorsten (DE); Clossen-von Lanken Schulz, Michael, 47661 Issum (DE); Lohmann, Hans-Peter, 46485 Wesel-Obrighoven (DE); Niepold, Karsten, 45481 Mülheim (DE); Nötzel, Annett, 45470 Mülheim an der Ruhr (DE); Stephan, Jürgen, 82178 Puchheim (DE)

(57) **Zusammenfassung**

Die Erfindung betrifft ein Verfahren zum Herstellen einer Schweißverbindung (8) mit den Schritten: Bereitstellen einer innerhalb eines Röhrengehäuses (5) angeordneten Röntgenröhre (3) zum Erzeugen von Röntgenstrahlung und eines innerhalb eines Detektorgehäuses (6) angeordneten Detektors (4) zum Empfangen der Röntgenstrahlung; Durchströmen der Gehäuse (5, 6) mit einem Kühlmedium; Erwärmen von zu verschweißenden Bauteilen (1, 2) auf die zum Herstellen der Schweißverbindung (8) erforderliche Vorwärmtemperatur; Schweißen der Schweißverbindung (8); Erstellen einer Aufnahme der Schweißverbindung (8) mittels der Röntgenröhre (3) und dem Detektor (4) bei einer Temperatur der Bauteile (1, 2), die im Wesentlichen die Vorwärmtemperatur oder höher ist, wobei die Gehäuse (5, 6) derart von dem Kühlmedium durchströmt werden, dass die Röntgenröhre (3) und der Detektor (4) bei ihrer jeweiligen Betriebstemperatur betrieben werden.

## Beschreibung

Die Erfindung betrifft ein Verfahren zum Herstellen einer Schweißverbindung.

Beim Bau von Turbomaschinen sind Schweißverbindungen von großen Bauteilen herzustellen. Insbesondere Wellen der Turbomaschinen sind derart massive und große Bauteile, dass bei der Herstellung von Schweißverbindungen an den Wellen diverse Arbeitsschritte notwendig sind. So sind zwei miteinander zu verschweißende Wellen vor dem Schweißvorgang vorzuwärmen, was aufgrund der Größe der betroffenen Wellen in der Regel energieintensiv und zeitintensiv ist. Nach dem Schweißvorgang wird in der Regel die Schweißverbindung auf Fehlstellen insbesondere mit einem zerstörungsfreien Prüfverfahren untersucht. Hierbei ist es bekannt ein Röntgenverfahren zu verwenden, wobei eine Röntgenaufnahme der Schweißverbindung mit einer entsprechenden Gerätschaft aufgenommen wird. Um die Gerätschaft nicht unzulässig hohe Temperaturen auszusetzen, die zu einer Zerstörung der Gerätschaft führen würden, ist es erforderlich, die Wellen auf Temperaturen von weniger als 40 °C abzukühlen. Werden gegebenenfalls mithilfe der Röntgenaufnahme Fehlstellen in der Schweißverbindung identifiziert, so ist die Schweißverbindung in dem Bereich der Fehlstellen nachzuarbeiten, was mit einem erneuten Vorwärmen der Welle einhergeht.

Aufgabe der Erfindung ist es, ein Verfahren zum Herstellen einer Schweißverbindung zu schaffen, welches für große Bauteile einfach und kostengünstig durchführbar ist.

Das erfindungsgemäße Verfahren zum Herstellen einer Schweißverbindung weist folgende Schritte auf: Bereitstellen einer innerhalb eines Röhrengehäuses angeordneten Röntgenröhre zum Erzeugen von Röntgenstrahlung und eines innerhalb eines Detektorgehäuses angeordneten Detektors zum Empfangen der Röntgenstrahlung; Durchströmen der Gehäuse mit einem Kühlmedium; Erwärmen von zu verschweißenden Bauteilen auf die zum Herstellen der Schweißverbindung erforderliche Vorwärmtemperatur; Schweißen der Schweißverbindung; Erstellen einer Aufnahme der Schweißverbindung mittels der Röntgenröhre und dem Detektor bei einer Temperatur der Bauteile, die im Wesentlichen die Vorwärmtemperatur oder höher ist, wobei die Gehäuse derart von dem Kühlmedium durchströmt werden, dass die Röntgenröhre und der Detektor bei ihrer jeweiligen Betriebstemperatur betrieben werden. Durch das erfindungsgemäße Verfahren ist es vorteilhaft ermöglicht, dass möglicherweise auftretende Fehlstellen der Schweißverbindung an den heißen Bauteilen mittels der Aufnahme identifiziert werden können. Die Fehlstellen können unmittelbar nachdem sie identifiziert worden sind, nachgearbeitet werden, so dass ein erneutes Vorwärmen der Bauteile vorteilhaft unterbleiben kann. Somit können sowohl Zeit als auch Energiekosten für das wiederholte Vorwärmen der Bauteile eingespart werden.

Das Röhrengehäuse und/oder das Detektorgehäuse weisen bevorzugt Kanäle auf, durch die das Kühlmedium derart geströmt wird, dass die Röntgenröhre und/oder der Detektor von den Bauteilen thermisch abgeschirmt werden. Somit wirken die Gehäuse als eine Barriere gegen einen Wärmeeintrag in die Röntgenröhre oder in den Detektor. Bevorzugtermaßen werden das Röhrengehäuse und/oder das Detektorgehäuse von dem Kühlmedium derart durchströmt, dass die Röntgenröhre und/oder der Detektor von dem Kühlmedium gekühlt werden.

Das Röhrengehäuse weist bevorzugt eine Apertur für die Röntgenstrahlung auf, durch die das Kühlmedium aus dem Röhrengehäuse austritt. Das Detektorgehäuse weist bevorzugt eine Öffnung für die Röntgenstrahlung auf, durch die das Kühlmedium aus dem Detektorgehäuse austritt.

Ein Schalldämpfer ist bevorzugt für das den Gehäusen zuströmende und/oder abströmende Kühlmedium vorgesehen. Es kann beim Durchströmen des Kühlmediums zu einer Schwingung der Röntgenröhre, des Detektors und/oder der Gehäuse kommen, welche die Aufnahme verfälschen können. Durch das Vorsehen des Schalldämpfers ist die Bildung der Schwingung vermindert, so dass vorteilhaft Aufnahmen mit einer hohen Genauigkeit gemacht werden können.

Das Kühlmedium ist bevorzugt Luft. Bevorzugtermaßen wird das Kühlmedium einer Druckluftversorgung entnommen. Oftmals besteht bereits eine Druckluftversorgungen in technischen Betrieben, so dass dadurch das Verfahren einfach durchführbar ist. Wird das Kühlmedium lediglich durch die Kanäle geströmt, so kann auch Wasser als Kühlmedium eingesetzt werden, da hier kein Kontakt des Kühlmediums mit der Röntgenröhre und/oder dem Detektor entsteht.

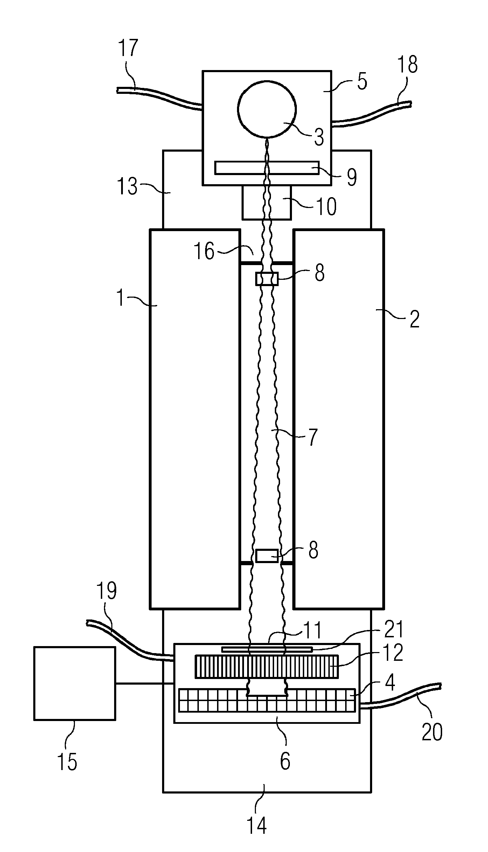

Im Folgenden wird anhand der beigefügten schematischen Zeichnung das erfindungsgemäße Verfahren erläutert. Die Figur zeigt einen Schnitt durch zwei zu verschweißende Bauteile zusammen mit einer Vorrichtung zur Aufnahme eines Röntgenbilds.

In der Figur sind ein erstes Bauteil 1 und ein zweites Bauteil 2 gezeigt, die miteinander zu verschweißen sind. Die Bauteile 1, 2 können beispielsweise zwei Wellen sein, die an ihren Stirnseiten miteinander zu verschweißen sind. Zwischen dem ersten Bauteil 1 und dem zweiten Bauteil 2 ist ein Spalt 16 ausgebildet, in dem eine Schweißverbindung 8 angeordnet ist. Die Schweißverbindung 8 verbindet die beiden Bauteile 1, 2. An radial gegenüberliegenden Seiten der Bauteile 1, 2 sind eine Röntgenröhre 3 zum Erzeugen von Röntgenstrahlung und ein Detektor 4 zum Detektieren der Röntgenstrahlung angeordnet. Von der Röntgenröhre 3 geht ein Röntgenstrahlungsbündel 7 aus, welches sich in dem Spalt 16 erstreckt, die Schweißverbindung 8 durchdringt und auf den Detektor 4 trifft.

Die Röntgenröhre 3 ist in einem Röhrengehäuse 5 und der Detektor 4 ist in einem Detektorgehäuse 6 angeordnet. Die Gehäuse 5, 6 werden dabei derart von einem Kühlmedium durchströmt, dass eine Aufnahme eines Röntgenbilds der Schweißverbindung 8 auch bei heißen Bauteilen 1, 2 möglich ist, ohne dass es zu einer Beschädigung der Röntgenröhre 3 und des Detektors 4 aufgrund einer zu hohen Temperatur kommt. In die Wände der Gehäuse 5, 6 können dazu Kanäle eingebracht sein, die im Wesentlichen parallel zu der jeweiligen Wand verlaufen und durch die das Kühlmedium derart strömt, dass die jeweilige Wand von dem Kühlmedium gekühlt ist. Es können alle Wände der Gehäuse 5, 6 die Kühlkanäle aufweisen oder es können nur einige ausgewählte Wände, wie zum Beispiel die zu den Bauteilen 1, 2 hin gewandten Wände, die Kanäle aufweisen. Bevorzugt ist, dass die Gehäuse 5, 6 von dem Kühlmedium durchströmt werden. Dazu weisen die Gehäuse 5, 6 an gegenüberliegenden Seiten jeweils ein Loch auf, durch die das Kühlmedium in die Gehäusen 5, 6 eingeströmt bzw. von den Gehäusen 5, 6 abgeströmt wird. Hierbei ist es bevorzugt, dass das Kühlmedium die Röntgenröhre 3 und den Detektor 4 jeweils umströmt. In den Gehäusen 5, 6, insbesondere unmittelbar benachbart zu der Röntgenröhre 3 und/oder dem Detektor 4, können zu einer Temperaturkontrolle Temperatursensoren vorgesehen werden.

An dem Röhrengehäuse 5 ist eine Zuleitung 17 für zuströmendes Kühlmedium und eine Ableitung 18 für abströmendes Kühlmedium vorgesehen. An dem Detektorgehäuse 6 ist eine Zuleitung 19 für zuströmendes Kühlmedium und eine Ableitung 20 für abströmendes Kühlmedium vorgesehen. Die Zuleitungen 17, 19 und die Ableitungen 18, 20 sind unmittelbar benachbart an den Löchern angeordnet. In den Leitungen 17 bis 20 und unmittelbar benachbart an den Gehäusen 5, 6 können Schalldämpfer vorgesehen werden. Weiterhin kann in die Leitungen ein Regelventil, beispielsweise ein Kugelhahnventil, eingebracht sein, mit dem der Massenstrom des Kühlmediums eingestellt werden kann. Weiterhin können in die Leitungen weitere Temperatursensoren eingebracht werden. Die Leitungen können beispielsweise an eine Druckluftversorgung angeschlossen werden.

Zum Anschließen der Druckluftversorgung kann das Gehäuse einen Anschlussstutzen aufweisen, der mit dem Gehäuse verschweißt oder verschraubt werden kann. An den Anschlussstutzen kann der Schalldämpfer angebracht werden. Der Schalldämpfer kann auch unmittelbar mit dem Gehäuse verschraubt werden.

Das Röhrengehäuse 5 weist eine Apertur auf, durch welche die Röntgenstrahlung aus dem Röhrengehäuse 5 austreten kann. Für den Fall, dass das Kühlmedium innerhalb des Röhrengehäuses strömt, kann vorgesehen werden, dass das Kühlmedium aus der Apertur in die Umgebung austritt. In diesem Fall ist es nicht erforderlich, dass an dem Röhrengehäuse 5 eine Leitung für das abströmende Kühlmedium vorgesehen wird. Innerhalb des Röhrengehäuses 5, zwischen der Röntgenröhre 3 und der Apertur, ist ein Bandpassfilter 9 für die Röntgenstrahlung angeordnet. Die Funktion des Bandpassfilters besteht darin, die spektrale Bandbreite der Röntgenstrahlung einzuengen, wodurch vorteilhaft Aufnahmen mit einer hohen Ortsauflösung möglich sind.

Das Detektorgehäuse 6 weist eine Öffnung auf, in die ein für die Röntgenstrahlung durchlässiges Eintrittsfenster 11 eingebracht ist. Es ist auch denkbar, dass kein Eintrittsfenster 11 vorgesehen wird und dass für den Fall, dass das Kühlmedium innerhalb des Detektorgehäuses 6 strömt, das Kühlmedium aus der Öffnung in die Umgebung austritt. Hierbei ist es nicht erforderlich an dem Detektorgehäuse 6 eine Leitung für das abströmende Kühlmedium vorzusehen.

Zwischen dem Röhrengehäuse 5 und den Bauteilen 1, 2 ist eine Röntgenlinse 10 angeordnet, durch die die Divergenz des Röntgenstrahlungsbündels 7 eingestellt wird. Die Röntgenlinse 10 kann auch innerhalb des Röhrengehäuses 5 angeordnet sein, so dass sie vorteilhaft durch das Kühlmedium gekühlt wird. Die Divergenz des Röntgenstrahlungsbündels 7 wird derart eingestellt, dass sowohl die Schweißnaht als auch die Schweißwurzel der Schweißverbindung 8 bestrahlt werden. Innerhalb des Detektorgehäuses 6, zwischen dem Eintrittsfenster 11 und dem Detektor 4, ist ein Streustrahlenfilter 12 angeordnet, den das Röntgenstrahlungsbündel 7 durchdringt. Unmittelbar nach der Röntgenröhre 3 ist ein erster Bandpassfilter 9 und unmittelbar vor dem Streustrahlenfenster 12 ist ein zweiter Bandpassfilter 21 angeordnet. Für die Strahlaufbereitung des Röntgenstrahlungsbündels 7 sind der erste Bandpassfilter 9, der zweite Bandpassfilter 21, die Röntgenlinse 10 und der Streustrahlenfilter 12 derart aufeinander abgestimmt, dass eine optimale Bildqualität im Detektor 12 erzielt wird.

Die Röntgenstrahlung wird von der Schweißverbindung 8 teilweise absorbiert, wohingegen die transmittierte Röntgenstrahlung auf den Detektor auftrifft. Bei dem Detektor 4 kann es sich sowohl um eine Zeilenkamera als auch um einen flächigen Bildsensor handeln. Mittels einer Auswerteeinheit 15 wird aus der transmittierten Röntgenstrahlung ein Bild erstellt. Die Auswerteeinheit 15 ist außerhalb des Detektorgehäuses 6 angeordnet.

Um das Röhrengehäuse 5 ist ein erster Streustrahlenfänger 13 derart angeordnet, dass er sich bis zu den Bauteilen erstreckt und die den Bauteilen 1, 2 zugewandte Wand des Röhrengehäuses innerhalb des ersten Streustrahlenfängers 13 angeordnet ist. Der erste Streustrahlenfänger 13 kann auch das Röhrengehäuse 5 vollständig umhüllen. Um das Detektorgehäuse 6 ist ein zweiter Streustrahlenfänger 14 angeordnet, der das Detektorgehäuse 6 vollständig umhüllt und sich bis zu den Bauteilen 1, 2 erstreckt. Durch die Streustrahlenfänger 13, 14 ist sichergestellt, dass keine Röntgenstrahlung nach außen tritt, die das Bedienpersonal gefährden kann.

Das Verfahren zum Herstellen der Schweißverbindung kann mit folgenden Schritten durchgeführt werden: Bereitstellen der innerhalb des Röhrengehäuses 5 angeordneten Röntgenröhre 3 zum Erzeugen von Röntgenstrahlung und des innerhalb des Detektorgehäuses 6 angeordneten Detektors 4 zum Empfangen der Röntgenstrahlung; Durchströmen des Inneren der Gehäuse 5, 6 mit Kühlluft, wobei die Kühlluft der Druckluftversorgung entnommen wird sowie unmittelbar benachbart an den Gehäusen 5, 6 und in den Zuleitungen 17, 18 jeweils der Schalldämpfer vorgesehen wird; Erwärmen der zu verschweißenden Bauteile 1, 2 auf die zum Herstellen der Schweißverbindung 8 erforderliche Vorwärmtemperatur; Schweißen der Schweißverbindung 8; Erstellen der Aufnahme der Schweißverbindung 8 mittels der Röntgenröhre 3 und dem Detektor 4 bei einer Temperatur der Bauteile 1, 2, die im Wesentlichen die Vorwärmtemperatur oder höher ist, wobei die Gehäuse 5, 6 derart von dem Kühlmedium durchströmt werden, dass die Röntgenröhre 3 und der Detektor 4 bei ihrer jeweiligen Betriebstemperatur betrieben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen einer Schweißverbindung (8) mit den Schritten:
- Bereitstellen einer innerhalb eines Röhrengehäuses (5) angeordneten Röntgenröhre (3) zum Erzeugen von Röntgenstrahlung und eines innerhalb eines Detektorgehäuses (6) angeordneten Detektors (4) zum Empfangen der Röntgenstrahlung;
- Durchströmen der Gehäuse (5, 6) mit einem Kühlmedium;
- Erwärmen von zu verschweißenden Bauteilen (1, 2) auf die zum Herstellen der Schweißverbindung (8) erforderliche Vorwärmtemperatur;
- Schweißen der Schweißverbindung (8);
- Erstellen einer Aufnahme der Schweißverbindung (8) mittels der Röntgenröhre (3) und dem Detektor (4) bei einer Temperatur der Bauteile (1, 2), die im Wesentlichen die Vorwärmtemperatur oder höher ist, wobei die Gehäuse (5, 6) derart von dem Kühlmedium durchströmt werden, dass die Röntgenröhre (3) und der Detektor (4) bei ihrer jeweiligen Betriebstemperatur betrieben werden.

2. Verfahren gemäß Anspruch 1,
wobei das Röhrengehäuse (5) und/oder das Detektorgehäuse (6) Kanäle aufweisen, durch die das Kühlmedium derart geströmt wird, dass die Röntgenröhre (3) und/oder der Detektor (4) von den Bauteilen (1, 2) thermisch abgeschirmt werden.

3. Verfahren gemäß Anspruch 1 oder 2,
wobei das Röhrengehäuse (5) und/oder das Detektorgehäuse (6) von dem Kühlmedium derart durchströmt werden, dass die Röntgenröhre (3) und/oder der Detektor (4) von dem Kühlmedium gekühlt werden.

4. Verfahren gemäß einem der Ansprüche 1 bis 4,
wobei das Röhrengehäuse (5) eine Apertur für die Röntgenstrahlung aufweist, durch die das Kühlmedium aus dem Röhrengehäuse (5) austritt.

5. Verfahren gemäß einem der Ansprüche 1 bis 4,
wobei das Detektorgehäuse (6) eine Öffnung für die Röntgenstrahlung aufweist, durch die das Kühlmedium aus dem Detektorgehäuse (6) austritt.

6. Verfahren gemäß einem der Ansprüche 1 bis 5,
wobei ein Schalldämpfer für das den Gehäusen (5, 6) zuströmende und/oder abströmende Kühlmedium vorgesehen wird.

7. Verfahren gemäß einem der Ansprüche 1 bis 6,
wobei das Kühlmedium Luft ist.

8. Verfahren gemäß Anspruch 7,
wobei das Kühlmedium einer Druckluftversorgung entnommen wird.
